Europäisches Patentamt

European Patent Office

Office européen des brevets

(11) Publication number: **0 231 720 B1**

# EUROPEAN PATENT SPECIFICATION

(45) Date of publication of patent specification: **21.11.91**    (51) Int. Cl.⁵: **B28D 1/14**

(21) Application number: **86500009.5**

(22) Date of filing: **30.12.86**

(54) **Apparatus for the obtention of annular cavities at the bottom of drills made on surfaces of any kind.**

(30) Priority: **31.12.85 ES 550611**

(43) Date of publication of application:
**12.08.87 Bulletin 87/33**

(45) Publication of the grant of the patent:
**21.11.91 Bulletin 91/47**

(84) Designated Contracting States:
**AT BE CH DE FR GB IT LI NL SE**

(56) References cited:
**DD-A- 40 756**
**DD-A- 138 948**
**DE-A- 2 348 211**
**FR-A- 1 443 246**

(73) Proprietor: **Sanchez Velasco, Vicente**
**Canillas, 93 - 4 - A**
**Madrid(ES)**

(72) Inventor: **Sanchez Velasco, Vicente**
**Canillas, 93 - 4 - A**
**Madrid(ES)**

(74) Representative: **Toro Arenal, José Maria**
**Viriato, 56**
**E-28010 Madrid(ES)**

Rank Xerox (UK) Business Services

## Description

The present invention refers to an apparatus that has been specially designed for creating undercut annular cavities or radial enlargements at the bottom of drilled holes previously made in any kind of surfaces, preferably in concrete walls although the said surfaces can obviously be of stone, brick, steel, etc.

The applicant is the owner of the Spanish Patent of Invention nº 548.461, which consists of a series of improvements introduced in anchoring systems by means of threaded bolts, an anchoring system which required, in the wall or surface a hole provided with an undercut annular cavity at its bottom. Therefore, the apparatus which the invention proposes is specially designed for creating such an undercut annular cavity at the bottom of the hole, allowing the said anchoring system by means of threaded bolts to be applied.

An other apparatus capable of undertaking an operation of this type is known under the FR-A-I 443 246 which discloses an apparatus for annular cavities at the bottom of drilled holes in any kind surface which is constituted by a body, fixable to a machine tool, as for instance a lathe, provided with an axial hole for an axle of considerable length, whilst at its other end is fixed a cutter whereby said axle is housed in a hole in a generally cylindrical casing piece which extends from said body to the cutter and with the particularity that said hole is eccentric, said casing piece being provided at its first end with a larger head which is susceptible of rotating with respect to the fixed body, in such a way that when the casing piece is located with the eccentricity in a first position, the cutter is aligned substantially axial with respect to the casing piece and the apparatus is adjustable in the drilled hole in which it is pretended to perform the annular cavity, whereby the rotation of the casing piece with respect to the fixed body determines the radial offset of said cutter up to a limit set by the eccentricity of it own hole, and the simultaneous rotation of said casing piece and the workpiece causes a hypocycloidal movement of the cutter, which determines in turn the size of the annular cavity.

The apparatus according to the invention performs its work with the cooperation of a cutter, of a nature in accordance with the type of material which the wall of the hole is composed of, which is driven with the aid of a conventional drilling machine the ouput head of which has a shaft coupled to it, to which the said cutter is fixed, but with the special feature that the said shaft is housed in a longitudinal and eccentric hole in a second casing piece so that the external casing piece presents a diameter which corresponds to that of the hole previously drilled in the surface, and an operational length in accordance with the depth of the said hole, the diameter of the cutter also coinciding with the diameter of the said hole, it having been provided for that in a certain relative position for both casing pieces, their eccentricities counteract each other and the shaft of the cutter is substantially aligned axially in relation to the external casing piece which allows it to penetrate freely into the hole, whilst from this position and by means of a rotation of the internal casing piece, a radial motion of the cutter is started so that it emerges radially in relation to the external casing piece and in consequence it begins work on the side wall at the bottom of the drilled hole, whilst at the same time a rotation of the external casing piece causes a progressive change of position of the whole assembly, and more precisely, its working area will be able to describe a circumferential trajectory coinciding with the annular cavity to be created.

As a complement of the structure described above which corresponds to claim 1 and as another feature of the invention according to claims 2 to 4, the apparatus has been provided with a means of cooling the cutter whilst it is operating, for which purpose an elastically deformable annular chamber has been defined in the external casing body, and more precisely in the area where it adapts to the front of the surface which seals it with the surface itself, a water, or any other cooling liquid, inlet channel being located on the inside of the said casing piece parallel to its shaft, which flows out into the end where the cutter is located and which returns removing the debris caused by the normal operation of the cutter, returning to the outside through the interstice defined between the wall of the hole itself and the external surface of the casing piece until reaching the said chamber which is duly connected to the water disposal conduit or pipe.

To complement the description to be made hereunder and for the purpose of aiding a better understanding of the characteristics of the invention, attached to the present specification as an integral part of it, is a set of drawings in which, with an illustrative and non limitative character, the following have been depicted:

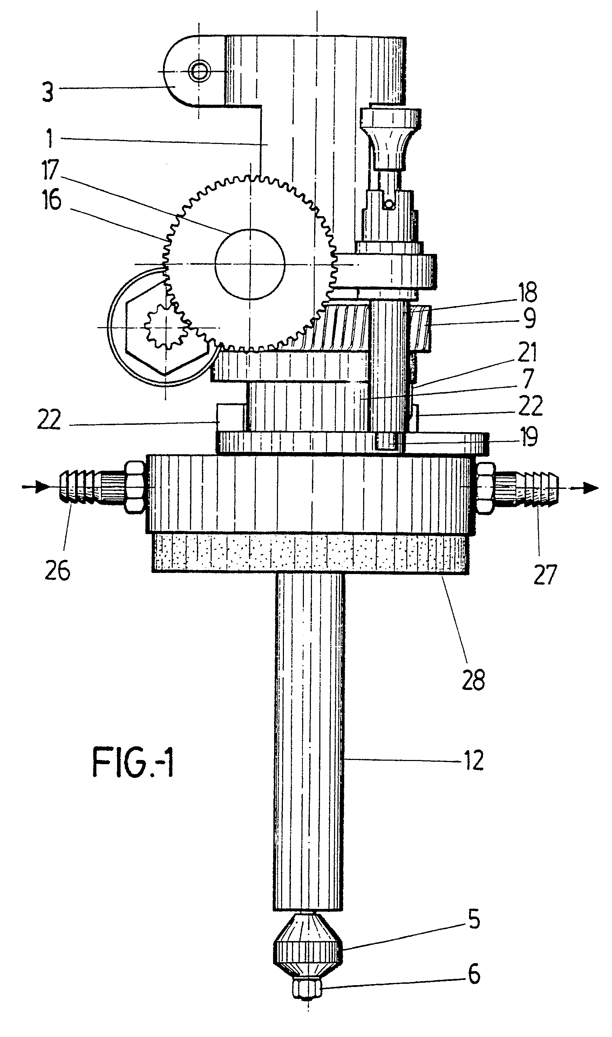

Figure 1.- Shows a side elevation view of an apparatus for creating undercut annular cavities at the bottom of drilled holes made in any kind of surface, according to the subject matter of the present invention.

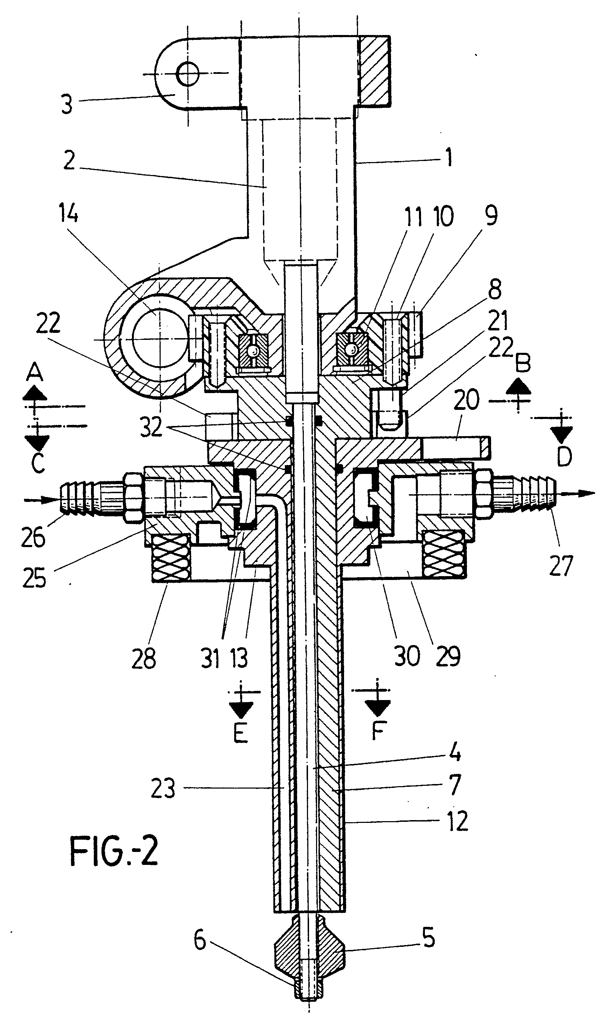

Figure 2.- Shows the same assembly as the previous figure diametrically sectioned.

Figure 3.- Shows a sectional view of the same apparatus, in accordance with the A-B cutting line of Figure 2 and in which the mechanisms transmitting the rotational motion to the internal casing piece are seen in detail.

Figure 4.- Shows another cross-section of the apparatus, made in this case in accordance with the C-D cutting line of Figure 2, in which in turn, the means limiting the rotational motion of the second casing piece or external casing piece are seen.

Figure 5.- Shows a sectional view of the apparatus at the level of the area of insertion within the drilled holed and in accordance with the E-F cutting line of Figure 2.

Figure 6.- Shows the same view as the previous Figure, in a variant of the embodiment, in which the cooling conduit is not arranged within the external casing piece, but rather between both casing pieces.

From these figures it can be seen how the apparatus, which is preconized, is constituted from a body (1) to be coupled to the housing of a drilling machine that has been schematically represented and referenced at (2) to which it is fixed with the aid of a clamp (3) or by any other conventional means, whilst at the same time the rotating head of the said machine is fixed to a shaft (4), evidently coaxial, the length of which will conform to the depth of the drilled hole, in accordance with the device's structure to be described hereunder and it ends in a cutter (5) in combination with which the annular cavity is to be created, the cutter being fixed to the said shaft (4) with the aid of a nut (6) in association with an threaded end portion of the shaft (4).

The shaft (4) which crosses the body (1) axially is in turn housed within a casing piece (7) which extends to near the cutter (5) and which in its initial portion (8) presents an area considerably expanded radially through which it engages with a gear wheel (9) preferably with the aid of screws (10), although the said gear wheel can be formed as a single piece with the portion (8) itself of the piece (7),the said piece (7-8-9) being in its whole capable of rotating in relation to the body (1) to which it is related through bearings (11) and characterized in that the shaft itself can rotate within this casing piece (7), but with the special feature that the hole created for that purpose in the said piece, with a diameter in accordance with that of the shaft itself (3) is located in a notably eccentric position over the said piece.

In turn, the casing piece (7) is housed within a second casing piece (12), the latter being provided with a longitudinal eccentric and cylindrical hole with a diameter coinciding with that of the piece (7) which moves tightly within the external piece (12).

Also this external casing piece (12) is provided with a larger head (13) which rests on the annular step defined between the internal casing piece (7) and its expanded end (8), as can be seen in detail in Figure (2).

The length of the shaft (4) and that of the casing pieces (7) and (12) is such that, between the face defined by the larger head (13) of the external casing piece (12) and the cutter (5) a size is created which is in accordance with the depth of the drilled hole in which it is intended to make the annular cavity.

From the foregoing, it is deducted that for the cutter (5) do its work, its rotational movement is carried out by the drilling machine coupled to the apparatus, and the possibility of the two casing pieces (7) and (12) rotating, and the eccentric mounting between these pieces and the shaft itself (4) determine that when the cutter rotates, which rotation at a certain position is coaxial with the external casing piece (12) to facilitate its implantation in the drill, the said cutter moves radially simultaneously with a planetary movement which in combination with its rotation are going to create the intended rebated annular cavity at the bottom of the drilled hole.

As a complement to the structure described and specifically at the heads (8) and (13) of the casing pieces (7) and (12), the controls of the apparatus are established to control and vary the eccentricity of the cutter within the drilled hole.

More precisely, the above mentioned bearing, as well as the gear wheel (9) associated with its head participate in the mobility of the casing piece (7), the said gear wheel engages with a worm gear (14) installed over the body (1), the said worm gear (14) having an axial extension ending in a pinion (15) which engages with another crown gear (16) solidly joined to a rotating handle (17). The solution adopted for this movement, that is, the crown-spindle drive, has been chosen as preferential as it keeps the shaft casing piece (7) locked in position, when the (17) handle is freed, but obviously this assembly can be replaced by another type of conventional drive. In a similar way, the said handle (17) can be replaced by a crank, handwheel or any other conventional means of drive, without this affecting the essence of the invention either.

Also forming part of the means of operating the apparatus, a ratchet (18) has been fitted on the body (1) the claw (19) of which enters the radial slot (20) existing in the head of the external casing piece (12) as seen in full detail in Figure (4).

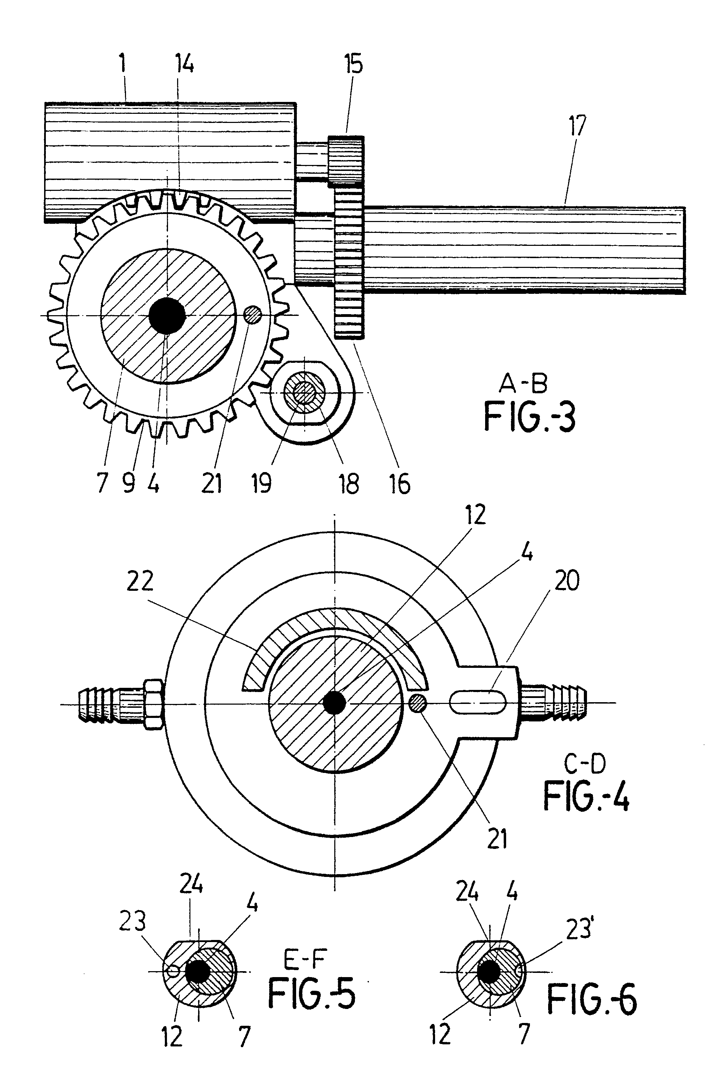

In addition, in the head of the internal casing piece (7) there is a stub (21) with which a projection (22) located on the head of the external casing piece (12) cooperates. More specifically, the projection (22) is located on the head of the piece (12), so that the stub (21) of the piece (7) laterally abuts one of the ends of the said projection (22) when the drills passing through both casing pieces (7) and (12) are orientated in the opposite direction, and with the other end of the said projection (22) when orientated in the same direction. Thereby, the projection (22) is extended along a 180 º arc as can also be seen in detail in Figure 4 or rather it extends along an arc allowing the stub (21) of the piece (7) to rotate 180º according to the thickness of the latter. Since, as deducted from the foregoing only the ends of the projection (22) are operative, they can be replaced by two simple stubs located in correspondence with the ends of the said projection (22), or by any other equivalent stop system.

From the above mentioned arrangement, it is understood that during the operation of the apparatus the external casing piece (12) can be operated in two different ways: either leaving it inactive, securing it to the body (1) through the ratchet (18), or making it rotate on being pulled by the internal casing piece (7) when the stub (21) of this piece pushes on the projection (22) of the external casing piece (12).

The operation of the apparatus is as follows:

The body (1) of the apparatus is coupled to a drilling machine (2) or to any other motor unit. The casing piece (12) is located so that its slot (20) is opposed to the ratchet (18). This ratchet is actuated so that its claw (19) enters the said slot (20), with which the external casing piece (12) is secured to the body (1). Afterwards, the internal casing piece (7) is rotated, in relation to the external casing piece (12) until the eccentricities of their respective perforations are orientated in opposite directions, at which time the cutter (5) and its corresponding shaft (4) are located in a notably axial arrangement of the assembly which allows the apparatus to be inserted into the hole previously drilled in the concrete, until the head (13) of the external casing piece (12) abuts the surface of the wall.

Then the handle (17) is rotated, which through the corresponding already described drive causes the internal casing piece (7) to rotate, the external casing piece (12) remaining static, with which the eccentricities of their respective longitudinal drilled holes change their relative orientation and in consequence the cutter (5) is moved laterally in relation to the piece (1), impinging on the side surface of the drilled hole, cutting away material to attain the desired annular cavity.

Once the piece (7) has rotated 180º in relation to the external piece (12) the stub (21) contacts the projection (22) and then the claw (19) of the ratchet (18) is extracted from the slot (20) after which both casing pieces (7) and (12) rotate together, pulling the internal casing piece towards the external one, when the stub (21) pushes the projection (22).

The handle (17) continues to be operated until the shaft (4) located in its most eccentric position rotates 360º and consequently the eccentricity completes its work in shaping the annular cavity.

In this position, the claw of the ratchet (18) is again opposed to the slot (20) of the external casing piece (12).

If it is desired to make a cavity in only part of the perimeter of the drilled hole, the casing pieces (7) and (12) can be rotated to the foreseen angle for such a cavity instead of the said 360º maximum angle.

When the foreseen angle is completed, the handle (17) is rotated in the opposite direction until the claw of the ratchet (18) is opposed to the slot (20).

Both in the case of the annular cavity being partial and in the case of it being total, the ratchet (18) is then activated again to lock the external casing piece (12), its claw (19) entering the slot (20), and then the handle (17) is rotated in the opposite direction to that used before until the stub (21) abuts the opposite end of the projection (22), in which position the eccentricities of the longitudinal perforations of the casing pieces (7) and (12) are orientated in the opposite direction, which is equivalent to the cutter (5) having again adopted a coaxial position with the apparatus as a whole, and this latter can be extracted from the drilled hole in question.

In conclusion, by inserting the apparatus in a drilled hole or perforation in which the external casing piece (12) is perfectly adjusted and by operating the apparatus in the specified manner, the cutter (5) is initially moved laterally or radially in relation to the said casing piece (12) with which it penetrates the wall of the drilled hole thus starting the desired cavity, whilst the latter joint rotation of both casing pieces determines the said planetary motion of the cutter, parallel to the rotary motion of the latter, which give rise to the cutter moving around the periphery of the drilled hole shaping a complete or partial annular cavity, according to whether these two casing pieces rotate at an angle less than or equal to 360º.

In practice, the operation of the apparatus, in accordance with the said arrangement is perfect from the theoretical point of view, and for the cutter to be able to carry out the cutting of the drilled hole, especially when the surface is composed of hard materials, as in the preferred and aforementioned case of concrete, it is necessary for it to be cooled.

In this respect, it has been foreseen that the external casing piece (12) incorporates additionally a conduit (23) clearly evident in Figures (2) and (5) to introduce cooling water into the working area of the cutter and likewise, to remove the debris produced. Optionally and in accordance with the depiction in Figure (6), the conduit (23) can be shaped in a slot (23) made over one of the generatrix of one of the two casing pieces (7) and (12), more specifically over an external generatrix of piece (7) or over a generatrix of the internal hole of the piece (12) the said slot being closed to form the desired conduit with the other piece, as seen in full detail in the said Figure (6).

In addition, along a generatrix of the external surface of the external casing piece (12) there is a rebate (24) which with the surface itself of the hole drilled in the concrete, defines an outlet channel for the cooling water and the said debris. This rebate (24) in the piece (12) is located opposite the arc which the shaft (4) describes when the internal casing piece (7) is rotated thus preventing the external casing piece (12) from moving. The said rebate (24) thus always remains opposite the area of the piece (12) which presses against the surface of the hole drilled in the concrete as a reaction to the resistence the said concrete presents to the penetration of the cutter (5).

More precisely, for connecting the cooling system a cylindrical piece (25) as been fitted to which the inlet (26) and the outlet (27) pipes for cooling water are connected.

This piece (25) is mounted around the head (13) of the external casing piece (12) as seen in Figure (2) so that it can rotate freely in relation to it. Therefore the piece (25) remains stationary when the piece (12) rotates.

On its front area, the piece (25) incorporates a ring (28) made of watertight and elastic material, intended to fit closely against the surface of the wall, when the head (13) of this piece abuts the said surface. Besides, the piece (25) incorporates an annular chamber (29) perimetrally closed by the said ring (28), provided for collecting the cooling water, and incorporated in the front of the head (13) which abuts the surface there is a radial rebate for connecting the longitudinal rebate (24) to the said chamber (29), which is evidently connected to the outlet pipe (27).

The head (13) in correspondence with this annular piece (25) presents a perimetral groove (30) which, with the annular piece (25) forms a chamber which is also annular, aided by seals (31), to which chamber (30) the inlet piping accedes, and from which the conduit (23) which is directed towards the working area of the cutter, emerges.

As is evident in Figure (2), the water inlet (30) and water and debris outlet (29) chambers are completely independent.

From the arrangement described, it is deduced that the cooling water arrives at the device through the inlet (26), enters the chamber (31) and from it the conduit (23) to reach the working area of the cutter from where, once it has accomplished its cooling task and removed the debris, it returns again to the exterior by means of the channel defined by the rebate (24) of the apparatus and the wall of the hole, reaching the chamber (29) and from it flows to the exterior through the outlet (27).

It should also be pointed out that in order to avoid leaks of cooling water around the shaft (4), the same is protected by a pair of seals (32).

The materials, shape, size and arrangement of the elements will be susceptible to changes whenever this does not suppose an alteration in the essence of the invention.

The terms in which this invention has been described should be taken in a broad and non limitative sense, the extend of protection being determined by the terms of the claims.

## Claims

1. APPARATUS FOR CREATING UNDERCUT ANNULAR CAVITIES AT THE BOTTOM OF DRILLED HOLES MADE IN ANY KIND OF SURFACES, which is constituted by a base body (1) fixable to the housing of any conventional motor unit (2), as for instance a drilling machine provided with an axial hole for a shaft (4) of considerable length, which at one of its ends is driven by the said motor unit (2), whilst its other end is fixed to a cutter (5) to which it transmits rotary movement, whereby the said shaft (4) is housed in a hole in a generally cylindrical casing piece (7) and mobile, which extends from the said body (1) to the cutter (5) and with the special feature that the said hole is markedly eccentric, the said casing piece (7) being provided at its first end with a larger head (8) which is capable of rotating in relation to the fixed body (1), through bearings (11), or similar means, characterized in that over this casing piece (7) is coupled a second casing piece (12) which extends between the head (8) of the first casing piece (7) and the cutter (5), provided as well with a radially larger head (13) at its first end and with a hole for the housing of the internal casing piece (7), which is also markedly eccentric, in such a way that when both casing pieces (7) and (12) are located with the eccentricities of their holes opposite, the cutter (5) is substantially aligned axially in relation to the external casing piece (12) and the apparatus is adjustable in the drilled hole in which it is intended to create the undercut annular cavity, whereby the rotation of the internal casing piece (12) determines the radial rebate of the said cutter (5) up to a limit set by the eccentricity of it own hole, and the simultaneous rotation of both casing pieces (7) and (12) causes a planetary movement of the cutter (5), which in turn determines the size of the undercut annular cavity.

2. APPARATUS FOR CREATING UNDERCUT ANNULAR CAVITIES AT THE BOTTOM OF DRILLED HOLES MADE IN ANY KIND OF SURFACES, as per claim 1, characterized in that for the rotation of the internal casing piece (7) the latter incorporates in its head, either as one single piece, or duly fixed to the same, a gear wheel (9) to which a worm gear (14) is engaged, or any other rotating gear mounted in the body associated to the corresponding manual control, also the base body (1) having been provided with a ratchet (18) with a claw (19) locking into a radial slot (20) of the head (13) of the external casing piece (12) to attach the latter rigidly to the said body and consequently to prevent it from moving: also the head (8) of the internal casing piece having been provided with a stub (21) capable of abutting the ends of a projection (22) on the head (13) of the external casing piece (12), so that the internal casing piece, on rotating can pull the said external casing piece in one or other direction upon the said stub impinging on the operational ends of the said projection, when the ratchet frees the external casing piece, with the special feature that the said projection (22) adopts a semi-circumferential shape, defining between its ends an angle of 180o. for the pulling stub, linked to the head of the internal casing, to swing round freely.

3. APPARATUS FOR CREATING UNDERCUT ANNULAR CAVITIES AT THE BOTTOM OF DRILLED HOLES MADE IN ANY KIND OF SURFACES, as per any of the previous claims, characterized in that the length of the said casing pieces (7) and (12) is such that their free ends are set at the same level and adjacent to the cutter (5) and at the same time, the distance between the said cutter (5) and the front area of the head corresponding to the external casing piece is in accordance with the depth of the hole on which the apparatus is to operate.

4. APPARATUS FOR CREATING UNDERCUT ANNULAR CAVITIES AT THE BOTTOM OF DRILLED HOLES MADE IN ANY KIND OF SURFACES, as per any of the previous claims, characterized in that within the external casing piece (12) or optionally along a generatrix of the internal casing piece (7) a channel (23) is established for the cooling water, which flows out at the level of the cutter (5) and which at its opposite end is subjected to an external radial elbowing and opens into an annular chamber (30) located in the head of the said external casing piece, an annular chamber which is closed with the aid of an annular and complementary piece (25), and with the participation of seals (31), an annular piece in which the corresponding water inlet conduit (26) is established, and to which an elastic ring (28) is frontally related which slightly overlaps the front of this head (13) in which a frontal groove (29) is defined which converts into a chamber when the apparatus is coupled to a tightly closed surface, with the aid of the said elastic ring (28), to which chamber an outlet pipe is attached and to which the cooling water accedes, removing the debris produced by the cutter through a channel established between the external casing piece and the wall of the drilled hole, which is produced by a rebate made in the external annular piece, along one of its generatrixes, the said rebate being located in front of the arc which the shaft of the cutter describes when the external casing piece remains stationary, and the internal casing piece is rotated.

**Revendications**

1. APPAREIL A EXECUTER DES CAVITES ANNULAIRES CREUSEES AU FOND DE TROUS PERFORES DANS TOUTE SORTE DE SURFACES, constitué par un corps de base (1) fixable au logement de toute unité motrice conventionnelle (2) telle que, par exemple, une machine perforatrice pourvue d'un trou axial/destiné à recevoir un axe ou arbre (4) d'une longueur considérable, lequel est actionné, à l'une de ses extrémités, par ladite unité motrice (2) alors que son autre extrémité est fixée sur un outil de coupe (5) qui transmet son mouvement rotatif, ledit axe ou arbre (4) étant logé dans un trou percé dans une structure généralament cylindrique (7) et mobile qui se prolonge du dit corps (1) à l'outil de coupe (5), avec la caractéristique que ledit trou est nettement excentrique, ladite structure (7) étant munie à sa première extrémité d'une plus grande tête (8) qui est capable de tourner,par rapport au corps fixe (1), à l'aide de/coussinets ou paliers (11) ou de tous autres moyens analogues, se caractérisant en ce que, sur ladite structure (7), est accouplée une seconde structure (12) qui s'étend entre la tête (8) et la première structure (7) et l'outil de coupe (5), qui porte également une tête radialement plus grande (13) sur sa première extrémité, avec un trou pour le logement de la structure interne (7) qui est également nettement excentrique de telle sorte que, lorsque ces deux structures (7) et (12) se trouvent situées avec les excentricités de leurs trous opposés, l'outil de coupe (5) se trouve substantiellement aligné axialement par rapport à la structure extérieure (12) et l'appareil est ajustable à l'intérieur du trou perforé dans lequel on se propose d'exécuter la cavité annulaire creusée et, ce faisant, la rotation de la structure interne (12) entraîne le rabaissement radial dudit outil de coupe (5) jusqu'à la limite établie par l'excentricité de son propre trou, et la rotation simultanée des deux structures (7) et (12) produit le mouvement planétaire de l'outil de coupe (5), lequel détermine,à son tour, la grandeur de la cavité annulaire creusée.

2. APPAREIL A EXECUTER DES CAVITES ANNULAIRES CREUSEES AU FOND DE TROUS PERFORES DANS TOUTE SORTE DE SURFACES, conformément à la revendication 1, se caractérisant en ce/que, pour permettre la rotation de la structure interne (7), se trouve incorporée dans sa tête -en une seule pièce ou dûment fixée sur cette dernière- une roue d'engrenage ou à pignon (9) sur laquelle s'engrène une vis sans fin (14) ou tout autre engrenage rotatif monté sur le corps contigu au contrôle manuel correspondant, le corps de base (1) étant également équipé d'une roue à cliquet ou à rochet (18),avec une griffe (19) qui s'enclenche dans une rainure radiale (20) de la tête (13) de la structure extérieure (12), afin de relier cette dernière de manière rigide audit corps, et partant, en évitant qu'elle puisse se mouvoir; la tête (8) de la structure interne étant également munie/d'un téton (21) à même de prendre contact avec les extrémités d'un épaulement (22) de la tête (13) de la structure extérieure (12), de sorte qu'en tournant la structure interne peut repousser ladite structure extérieure dans l'une ou l'autre direction sur ledit téton, en frappant les extrémités opérationnelles dudit épaulement, quand la roue à cliquet libère la structure extérieure, avec la caractéristique spéciale que ledit épaulement (22) a une configuration en demi-cercle définissant, entre ses extrémités, un angle de 180 degrés par rapport au téton ou crabot d'entraînement, qui est relié à la tête de la structure interne pour basculer librement autour.

3. APPAREIL A EXECUTER DES CAVITES ANNULAIRES CREUSEES AU FOND DE TROUS PERFORES DANS TOUTE SORTE DE SURFACES, conformément à l'une quelconque des revendications précédentes, se caractérisant en ce que la longueur desdites structures (7) et (12) est telle que leurs extrémités libres s'établissent au même niveau et adjacentes à l'outil/de coupe (5), tandis que la distance entre ledit outil de/coupe (5) et l'avant de la tête correspondant à la structure extérieure est conforme à la profondeur du trou dans/lequel doit fonctionner l'appareil.

4. APPAREIL A EXECUTER DES CAVITES ANNULAIRES CREUSEES AU FOND DE TROUS PERFORES DANS TOUTE SORTE DE SURFACES, conformément à l'un quelconque des revendications précédentes, se caractérisant en ce que, dans la structure extérieure (12) ou, optionnellement, tout au long d'une génératrice de la structure interne (7), se trouve ménagée une cannelure ou rigole (23) pour l'eau de refroidissement qui s'écoule au niveau de l'outil de coupe et qui décrit, à son extrémité opposée, un coude radial extérieur et donne/sur une chambre annulaire (30) située à l'intérieur de la/tête de ladite structure extérieure, chambre annulaire qui se ferme à l'aide d'une pièce annulaire et complémentaire (25) et d'anneaux ou bagues d'étanchéité (31), pièce annulaire où se trouve ménagé le conduit d'amenée d'eau correspondant (26) et à laquelle est relié un anneau élastique ou circlip (28),frontalement, qui recouvre à peine l'avant de cette tête (13) où est ménagée une rainure frontale (29) qui se convertit en chambre quand l'appareil est accouplé à une surface fortement compacte, à l'aide dudit anneau élastique ou circlip (28), un tuyau de sortie étant relie à ladite chambre à laquelle a accès l'eau de refroidissement qui élimine les détritus produits par l'outil de coupe à travers une cannelure ménagée entre ta structure extérieure et la paroi du trou perforé et consistant en une feuillure su délardement ménagé dans la pièce annulaire extérieure, tout au long de l'une de ses génératrices, ladite feuillure se trouvant située devant l'arc que décrit l'axe de l'outil de coupe quand la structure extérieure reste fixe alors qu'on fait tourner la structure interne.

**Patentansprüche**

1. GERÄT ZUR SCHAFFUNG VON RINGAUSNEHMUNGEN, AUSGEGRABEN AM BODEN VON IN JEDER ART VON FLÄCHEN PERFORIERTEN LÖCHERN, gebildet von einem Grundkörper(1), der an jedwede konventionelle Motoreinheit (2) befestigt werden kann wie z.B. eine Bohrmaschine, ausgerüstet mit einem Axialloch zur Aufnahme einer Aachse (4) beachtlicher Länge, die an ihrem einen Ende fest mit einem Schneidwerkzeug (5) verbunden ist, dem sie ihre Drehbewegung überträgt, wobei besagte Achse (4) von einem Loch aufgenommen wird, das in einer im allgemeinen zylindrischen Struktur(7) und beweglichen Struktur ausgeführt ist, die sich von diesem Körper (1) bis zum Schneidwerkzeug(5) erstreckt und mit dem besonderen Merkmal, dass diese Öffnung bzw. Loch ausgesprochen exzentrisch ist, während die besagte Struktur(7) an ihrem ersten Ende mit einem grösseren Kopf (8) versehen ist, geeignet, sich hinsichtlich des feststehenden Körpers (1) mittels Lager(11) oder ähnlicher Mittel zu drehen, dadurch gekennzeichnet, dass auf der besagten Struktur (7) eine zweite Struktur (12) aufgebracht ist, die sich zwischen dem Kopf (8) und der ersten Struktur (7) und dem Schneidwerkzeuk(5) erstreckt, das ebenfalls einen radial grösseren Kopf (13) am ersten Ende aufweist und mit einer Öffnung bzw. Loch für die Aufnahme oder Unterbringung der inneren Struktur (7), ebenfalls ausgesprochen exzentrisch, sodass wenn beide Strukturen (7) und (12) aussermittig gemäss ihrer entgegengesetzten öffnungen bzw. Löcher gestellt werden, das Schneidwerkzeug(5) im wesentlichen axial fluchtet in Bezug auf die äussere Struktur (12) und das Gerät kann innerhalb des gebohrten Loches einjustiert werden, in dem die ringförmig untergrabene Ausnehmung erfolgen soll, sodass damit die Drehung der Struktur(12) den radialen Einschnitt des fraglichen Schneidwerkzeuges (5) bis zum Limit bestimmt, der durch die Aussermittigkeit des eigenen Loches gegeben ist und die gleichzeitige Drehung beider Strukturen (7) und (12) erzeugt die planetarische Bewegung des Schneidwerkzeuges (5), die ihrerseits die Grösse der untergrabenen Ringausnehmung bestimmt.

2. GERAT ZUR SCHAFFUNG VON RINGAUS-NEHMUNGEN, AUSGEGRABEN AM BODEN VON IN JEDER ART VON FLÄCHEN PERFORIERTEN LÖCHERN, gemäss Anspruch 1, dadurch gekennzeichnet, dass zur Drehung der inneren Struktur(7) diese an ihrem Kopf,als Stück in einem und entsprechend an diesen befestigt, ein Zahnrad (9) besitzt, in welches eine Schnecke (14) oder sonst eine andere Drehverzahnung, aufgebracht auf dem Körper zur entsprechenden Kontrolle von Hand eingreift, während desgleichen der Grundkörper (1) ein Hemmrad (18) mit einer Klinke aufweist (19), die in eine radiale Nut (20) des Kopfes (13) der äusseren Struktur (12) eingreift bzw. einrastet,um diese Struktur mit besagtem Körper zu verbinden und demzufolge zu vermeiden, dass sie sich bewegt; der Kopf (8) der inneren Struktur ist ferner mit einem Anschlagstift (21) ausgerüstet, der in der Lage ist, mit den Enden einer Nase(22) in Kontakt zu treten, welche Nase sich am Kopf(13) der äusseren Struktur (12) befindet, sodass die innere Struktur, wenn sie sich dreht, die besagte äussere Struktur in die eine oder andere Richtung über die Nase schieben kann, durch Anschlag an die operierenden Enden der besagten Nase, wenn das Klinkenrad die äussere Struktur freigibt, mit der besonderen Charakteristik, dass diese Nase (22) eine halbumkreisförmige Ausbildung annimmt, die zwischen ihren Enden einen Winkel von 180 Grad hinsichtlich des Schiebestiftes definiert, der an den Kopf der inneren Struktur anschliesst, um ringsum frei zu kippen(schwenken).

3. GERÄT ZUR SCHAFFUNG VON RINGAUS-NEHMUNGEN, AUSGEGRABEN AM BODEN VON IN JEDER ART VON FLÄCHEN PER-FOERIERTEN LÖCHERN gemäss irgendeines der vorangehenden Ansprüche, dadurch gekennzeichnet, dass die Länge der besagten Strukturen (7) und (12) derart ist, dass ihre freien Enden auf gleicher Ebene liegen, und am Schneidwerkzeug (5) anliegend und dass zu gleicher Zeit der Abstand zwischen dem besagten Schneidwerkzeug (5) und dem vorderen Teil des Kopfes, der zur äusseren Struktur gehört, mit der Tiefe des Loches im Einklang steht, in welchem das Gerät zu arbeiten hat.

4. GERÄT ZUM SCHAFFEN VON RINGAUS-NEHMUNGEN , AUSGEGRABEN AM BODEN VON IN JEDER ART VON FLÄCHEN PERFORIERTEN LÖCHERN, gemäss irgendeines der vorstehenden Ansprüche, dadurch gekennzeichnet , dass innerhalb der Aussenstrucktur (12) oder wahlweise längs einer Mantellinie der inneren Struktur(7) ein Kanal (23) vorgesehen ist, für das Kühlwasser, das auf der Höhe des Schneidwerkzeuges fliesst und dass am entgegengesetzten Ende eine radiale äussere Krümmung fungiert und sich zu einer Ringkammer (30) hin öffnet, die sich innerhalb des Kopfes der besagten Aussenstrucktur befindet, welche Ringkammer mit Hilfe eines Ringteils ergänzender Art (25) schliesst, mit Einschaltung von Dichtringen (31); in dem ergänzenden Ringteil befindet sich die entsprechende Zufuhrleitung des Wassers (26) und mit der frontal ein elastischer Ring(28) in Beziehung steht, welcher leicht den vorderen Teil dieses Kopfes (13) abdeckt, wo eine frontale Rille definiert ist (29), die zu einer Kammer wird, wenn das Gerät an eine gedrängt kompakte Fläche angebracht wird, mit Hilfe des besagten Federringes(28), an welche Kammer ein Ablaufrohr angeschlossen ist und zu welcher das Kühlwasser Zutritt hat, welches die Abfallstoffe ausscheidet, die durch das Schneidwerkzeug entstehen und zwar über einen Kanal, der zwischen der äusseren Struktur und der Wandung des gebohrten Loches liegt, hervorgerufen durch einen im äusseren Ringteil vorgenommenen Einschnitt längs einer der Mantellinien, wobei der besagte Einschnitt vor dem Bogen liegt, den die Achse des Schneidwerkzeuges beschreibt, wenn die Aussenstruktur fest stehen bleibt und die innere Struktur gedreht wird.

EP 0 231 720 B1

FIG.-1

FIG.-2

A-B
FIG.-3

C-D
FIG.-4

E-F
FIG.5

FIG.-6